Europäisches Patentamt

European Patent Office

Office européen des brevets

(19)

(11) **EP 0 471 878 B1**

(12) **EUROPÄISCHE PATENTSCHRIFT**

(45) Veröffentlichungstag und Bekanntmachung des Hinweises auf die Patenterteilung:
**10.04.1996 Patentblatt 1996/15**

(51) Int Cl.$^6$: **H04N 5/45**

(21) Anmeldenummer: **90116186.9**

(22) Anmeldetag: **23.08.1990**

(54) **Verfahren zur Bild-im-Bild-Einblendung und Einrichtung zur Durchführung des Verfahrens**

Method of picture-in-picture superimposition and apparatus for following the method

Procédé de superposition image-dans-image et appareil pour suivre ce procédé

(84) Benannte Vertragsstaaten:
**DE FR GB IT NL**

(72) Erfinder: **Braun, Bodo, Dr.**
**W-8000 München 83 (DE)**

(43) Veröffentlichungstag der Anmeldung:
**26.02.1992 Patentblatt 1992/09**

(73) Patentinhaber: **SIEMENS AKTIENGESELLSCHAFT**
**D-80333 München (DE)**

(56) Entgegenhaltungen:
GB-A- 2 187 360          US-A- 4 724 487

- **IEEE TRANSACTIONS ON CONSUMER ELECTRONICS. vol. CE-33, no. 3, August 1987, NEW YORK US Seiten 230 - 238; Michio Masuda et al: "Picture in picture system with a digital memory for VCRs"**

**Beschreibung**

Die Erfindung betrifft ein Verfahren zur Bild-im-Bild-Einblendung nach dem Oberbegriff des Anspruchs 1 sowie eine Einrichtung zur Durchführung des Verfahrens.

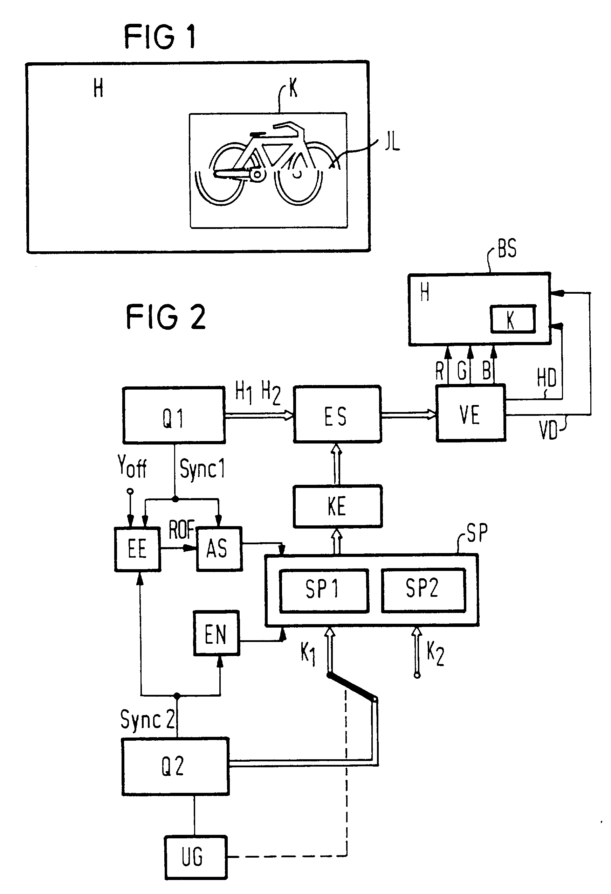

Bei der Verwendung von Bildspeichern zur Bild-im-Bild-Einblendung kann das einzublendende Bild, im allgemeinen ein Kleinbild, durch das Erscheinen einer sogenannten "joint-line" beeinträchtigt werden. Diese Störung führt insbesondere bei horizontal bewegtem Bildinhalt zu einem unerwünschten Bildschnitt. FIG 1 zeigt beispielhaft ein in ein Großbild H eingeblendetes Kleinbild K mit einem solchen Bildschnitt, wenn man davon ausgeht, daß das dargestellte Fahrrad eine horizontale Bewegung von links nach rechts ausführt.

Die Ursache für einen derartigen Bildschnitt liegt darin, daß die Bildinformation für das Kleinbild aus der Speichereinrichtung ausgelesen wird, während der Inhalt dieser Speichereinrichtung gerade von neuen Bilddaten überschrieben wird. Da die Auslesegeschwindigkeit höher als die Einschreibgeschwindigkeit ist, befinden sich damit neue und alte Bilddaten in der Speichereinrichtung, die ausgelesen zwei zueinander versetzte und durch die "joint-line" getrennte Bildteile ergeben.

Es sind verschiedene Verfahren bekannt geworden, einen derartigen Bildschnitt bei der Bild-im-Bild-Einblendung zu vermeiden. So ist in IEEE Transactions on Consumer Electronics, Vol. CE-33, no. 3, August 1987, p. 230-238, zur Beseitigung des Bildschnitts im Kleinbild vorgeschlagen, vier Speicherbereiche in der Speichereinrichtung vorzusehen, die unter zyklischer Wiederholung der Speicherbereichsfolge abwechselnd mit jeweils einem der aufeinanderfolgenden Bilder bzw. Halbbilder des Kleinbildes beschrieben werden. Das Auslesen der Bilder erfolgt aus demjenigen Speicherbereich, der gerade nicht beschrieben wird. Dieses als Wechselpufferbetrieb bezeichnete Verfahren funktioniert auch mit nur drei Speicherbereichen, wie in der DE 38 04 705 Al die dortige Figur 3 zeigt. Wesentlich ist lediglich, daß das Einschreiben und Auslesen der Bilddaten für das Kleinbild wechselweise aus den drei bzw. vier Speicherbereichen erfolgt und ein zeitliches Überlappen von Lesen und SChreiben verhindert wird.

In der DE-C2-36 90 375 ist auf Seite 3, Zeile 10 bis 20, beschrieben, die joint-line durch die Verwendung von nur zwei Speicherbereichen zu verhindern, wobei über einen Zwischenzeilensteuerungsschaltkreis der Speicherbereich zum Auslesen der Bilddaten für das Kleinbild ausgewählt wird, der eine bildschnittfreie Darstellung des Kleinbildes ermöglicht. Der Zwischenzeilensteuerungsschaltkreis ist mit einem Feldpolaritätserkennungsteil für das einzublendende Bild und das Hauptbild verbunden. In der gezeigten Schaltung wird festgelegt, in welchen der beiden Speicherbereiche das Bildsignal für das Kleinbild eingeschrieben werden soll. Das korrespondierende Dokument GB-A-2 187 300 enthält entsprechende Ausführungen. Dieser Stand der Technik ist im Oberbegriff des geltenden Anspruches 1 berücksichtigt worden. Der Erfindung liegt die Aufgabe ugrunde, ein Verfahren und eine Einrichtung zur bildschnittfreien Bild-im-Bild-Einblendung anzugeben, mit der unabhängig davon, in welcher Reihenfolge die beiden Speicherbereiche mit Bildsignalen des Kleinbildes zu beschreiben sind, eine zuverlässige und einfach zu realisierende bildschnittfreie Einblendung des Kleinbildes in das Hauptbild möglich ist.

Die Aufgabe wird für das Verfahren durch die kennzeichnenden Merkmale des Anspruchs 1 gelöst.

Eine Einrichtung zur Durchführung des erfindungsgemäßen Verfahrens ist Gegenstand des Anspruchs 7.

Wird eine Speichereinrichtung mit einer Kapazität zum Speichern eines gesamten Bildes bzw. eines Halbbildes des Hauptbildes (z.B. 288 Zeilen mal 720 Punkte) vorgesehen und der erste Speicherbereich in den für die linke Bildhälfte vorgesehenen Speicherteil und der zweite Speicherbereich in den für die rechte Bildhälfte vorgesehenen Speicherteil der Speichereinrichtung gelegt, so kann mit dem Synchronrahmen des Hauptbildes ein synchrones Auslesen des gesamten Bildspeichers und damit die Bild-im-Bild-Einblendung erfolgen. Darüber hinaus kann das einzublendende Kleinbild, beispielsweise durch in die Speichereinrichtung eingeschriebene Markierungskennzeichnungen - vgl. dazu EP-A1-0 357 813 - an beliebigen Stellen im Hauptbild eingeblendet werden. Voraussetzung dafür ist, daß in Horizontalrichtung das einzublendende Kleinbild entweder aus dem ersten Speicherbereich oder aus dem zweiten Speicherbereich ausgelesen und zur Darstellung verwendet wird. Darüber hinaus ist es mit dem erfindungsgemäßen Verfahren möglich, neben einem einzublendenden Kleinbild mit bewegtem Bildinhalt auch weitere in das Hauptbild einzublendenden Kleinbilder, die Standbilder sind, in die Speichereinrichtung einzuschreiben und zur Darstellung zu bringen. Anhand der nachfolgenden Figurenbeschreibung wird dies noch näher ausgeführt.

Beim Auslesen der Bilddaten aus einem der beiden Speicherbereiche kann es vorkommen, daß das einzublendende Kleinbild unerwünschte Zeilensprunginversionen aufweist. In einer Weiterbildung der Erfindung ist es daher vorgesehen, diese unerwünschten Zeilensprunginversionen zu erfassen und durch eine Zeilenkorrektur zu eliminieren.

Darüber hinaus schlägt die Erfindung vor, das einzublendende Kleinbild und Hauptbild mit einer im Vergleich zur ursprünglichen Bildfolgefrequenz doppelten Bildfolgefrequenz darzustellen, also mit beispielsweise 100 Hz oder 120 Hz. Je nachdem welche Bildrasterfolge das Hauptbild aufweist, also AABB oder ABAB - wobei A und B für jeweils ein Bild bzw. Halbbild stehen - wird erfindungsgemäß ein Identifikationssignal zum Erkennen der augenblicklichen Rasterlage des Hauptbildes und abhängig davon ein Rasterkorrektursignal generiert. Durch das Rasterkorrektursignal wird eine Rasterkorrektur bei den aus dem ausgewählten Speicherbereich auszulesenden Bild des Kleinbildes ausgelöst. Die Rasterkorrektur erfolgt zweckmäßigerweise durch Interpolation.

Im folgenden wird die Erfindung anhand von 14 Figuren eingehend am Beispiel von Fernsehsignalen, die nach dem Zwischenzeilenverfahren empfangen werden, erläutert. Dabei wird jedes Fernsehbild in zwei Halbbilder unterteilt, die ungerade und gerade Zeilen enthalten und die mit 50 Hz bzw. 60 Hz Halbbildfrequenz übertragen werden. Die Erfindung ist jedoch auch bei Einrichtungen anwendbar, die anstatt Halbbilder Vollbilder verarbeiten und/oder keine Zeilensprünge aufweisen. Als Beispiel hierfür sei auf Videoquellen wie PersonalComputer oder bestimmte Videoaufzeichnungsgeräte verwiesen.

In den nachfolgenden Figuren stehen gleiche Bezugszeichen stets für gleiche Teile. Es zeigen:

FIG 1 ein in ein Hauptbild eingeblendetes Kleinbild mit joint-line,

FIG 2 ein vereinfachtes Blockschaltbild einer erfindungsgemäßen Einrichtung zur bildschnittfreien Einblendung eines Kleinbildes in ein Hauptbild mit zwei Speicherbereichen und einer Entscheidungseinrichtung zum Festlegen, aus welchen der beiden Speicherbereiche das Kleinbild auszulesen ist,

FIG 3 eine detailierte Schaltungsanordnung der Entscheidungseinrichtung von FIG 2,

FIG 4 ein erstes Ausführungsbeispiel eines Zeilenindexdiagrammes mit Auslese- und Einschreibvektoren, die das Auslesen und Einschreiben der Halbbilder in die beiden Speicherbereiche kennzeichnen,

FIG 5 Zeilenindexdiagramme zum Bestimmen eines für die Entscheidungseinrichtung notwendigen Freigabesignales,

FIG 6 ein zweites Ausführungsbeispiel von Zeilenindexdiagrammen mit Auslese- und Einschreibvektoren,

FIG 7 einen Bildschirm mit einem in ein Hauptbild eingeblendeten Kleinbild, das keine Zeilensprunginversion aufweist,

FIG 8 einen Bildschirm nach FIG 7, jetzt jedoch mit einer Zeilensprunginversion im Kleinbild,

FIG 9 einen Bildschirm nach FIG 8, bei dem die Zeilensprunginversion im Kleinbild durch ein um eine Bildzeile nach oben versetztes ungerades Halbbild korrigiert ist,

FIG 10 einen Bildschirm nach FIG 8, bei dem die Zeilensprunginversion im Kleinbild durch ein um eine Bildzeile nach unten versetztes gerades Halbbild korrigiert ist,

FIG 11 eine Speichereinrichtung für ein gesamtes Halbbild des Hauptbildes mit einem ersten Speicherteil zum Speichern der für die linke Bildhälfte vorgesehenen Bilddaten und einem zweiten Speicherteil zum Speichern der für die rechte Bildhälfte vorgesehenen Bilddaten,

FIG 12 eine detaillierte Schaltungsanordnung einer Entscheidungseinrichtung bei einer Bild-im-Bild-Einblendung mit im Vergleich zur ursprünglichen Bildfolgefrequenz bzw. Halbbildfolgefrequenz doppelten Bildfolgefrequenz bzw. doppelten Halbbildfolgefrequenz,

FIG 13 Prinzipdarstellung des erfindungsgemäßen Verfahrens mit Raster-Korrektur bei einer Bild-im-Bild-Einblendung mit doppelter Bild-, bzw. Halbbildfolgefrequenz anhand von Zeilenindexdiagrammen und

FIG 14 Prinzipdarstellung des erfindungsgemäßen Verfahrens bei einer Bild-im-Bild-Einblendung mit doppelter Bild-, bzw. Halbbildfolgefrequenz anhand von Zeilenindexdiagramm.

FIG 1 zeigt ein in ein Hauptbild H eingeblendetes Kleinbild K mit unerwünschtem Bildschnitt, den es gemäß der vorliegenden Erfindung zu vermeiden gilt. Das Kleinbild K weist zwei zueinander versetzte Bildteile auf, die durch eine joint-line JL getrennt sind.

In FIG 2 ist der prinzipielle Aufbau einer erfindungsgemäßen Einrichtung zur Durchführung der bildschnittfreien Bild-im-Bild-Einblendung beispielhaft anhand eines Fernsehgerätes mit einem Bildschirm BS, auf dem das Hauptbild K in das Großbild H einblendbar ist, dargestellt. Die Einrichtung verfügt über eine erste Videoquelle Q1 und zweite Videoquelle Q2. Die erste Videoquelle Q1 liefert das Hauptbild H mit ersten abwechselnd aufeinanderfolgenden und erste Synchronsignale Sync 1 aufweisende Halbbilder $H_1$, $H_2$. Die zweite Videoquelle liefert abwechselnd aufeinanderfolgende zweite Synchronsignale Sync 2 aufweisende Halbbilder $K_1$, $K_2$ für das Kleinbild K. Darüber hinaus ist eine Speichereinrichtung SP mit zwei Speicherbereichen SP1, SP2 vorgesehen, in die die aufeinanderfolgenden Halbbilder $K_1$, $K_2$ des Kleinbildes K mittels einer Einleseeinrichtung EN einschreibbar sind. In den einen Speicherbereich SP1 werden die ungeraden Halbbilder $K_1$ und in den anderen Speicherbereich SP2 die geraden Halbbilder $K_2$ des Kleinbildes eingeschrieben. Weiterhin weist die Einrichtung eine Ausleseeinrichtung AS zum Auslesen der in den Speicherbereichen SP1, SP2 gespeicherten Halbbilder $K_1$, $K_2$ sowie eine Einblendeinrichtung ES zur bildschnittfreien Einblendung dieser Halbbilder $K_1$, $K_2$. Über eine Entscheidungseinrichtung EE ist der Ausleseeinrichtung AS ein Entscheidungssignal ROF zuführbar. Dieses Entscheidungssignal ROF legt zu Beginn der Darstellung des Hauptbildes H fest, aus welchem der beiden Speicherbereiche SP1, SP2 ein gespeichertes Halbbild $K_1$, $K_2$ des Kleinbildes K zur Einblendung in das Hauptbild H auszulesen ist.

Das Einschreiben der aufeinanderfolgenden Halbbilder $K_1$, $K_2$ in die Speicherbereiche SP1, SP2 wird über eine mit der zweiten Videoquelle Q2 verbundene Detektoreinrichtung UG gesteuert, die feststellt, ob ein soeben empfangenes Halbbild $K_1$, $K_2$ der zweiten Videoquelle Q2 ein ungerades Halbbild $K_1$ oder ein gerades Halbbild $K_2$ ist. Weiterhin ist zwischen die Speichereinrichtung SP und die Einblendeinrichtung ES eine Korrektureinrichtung KE zum Korrigieren auftretender Zeilensprunginversionen im einzublendenden Kleinbild K vorgesehen. Diese Korrektureinrichtung KE kann natürlich dann entfallen, wenn eine der beiden Videoquellen Q2, Q1 andere als nach dem Zeilensprungverfahren gebildete Videosignale bereitstellt. Auftretende Zeilensprunginversionen bei der Bild-im-Bild-Einblendung können im einfachsten Fall durch eine Adressenmodifikation der Speicheradressen beim Auslesen der Halbbilder $K_1$ bzw. $K_2$ aus der Speichereinrichtung SP erfolgen. Die somit gegebenenfalls korrigierten Halbbilder $K_1$ bzw. $K_2$ des Kleinbildes K gelangen zur Einblendeeinrichtung ES, wo sie in die geraden und ungeraden Halbbilder $H_1$, $H_2$ des Hauptbildes eingefügt werden und anschließend an eine Videoverarbeitungseinrichtung VE zur Weiterverarbeitung der Bild-im-Bild-Videosignale gelangen. Im allgemeinen wird die Videoverarbeitungseinrichtung VE ein Videosignalprozessor sein, der einen Videoverstärker sowie eine Ablenkschaltung aufweist, um die Bildröhre des Fernsehgerätes beispielsweise mit RGB-Signalen sowie den dazu notwendigen Ablenkströmen HD, VD zu versorgen.

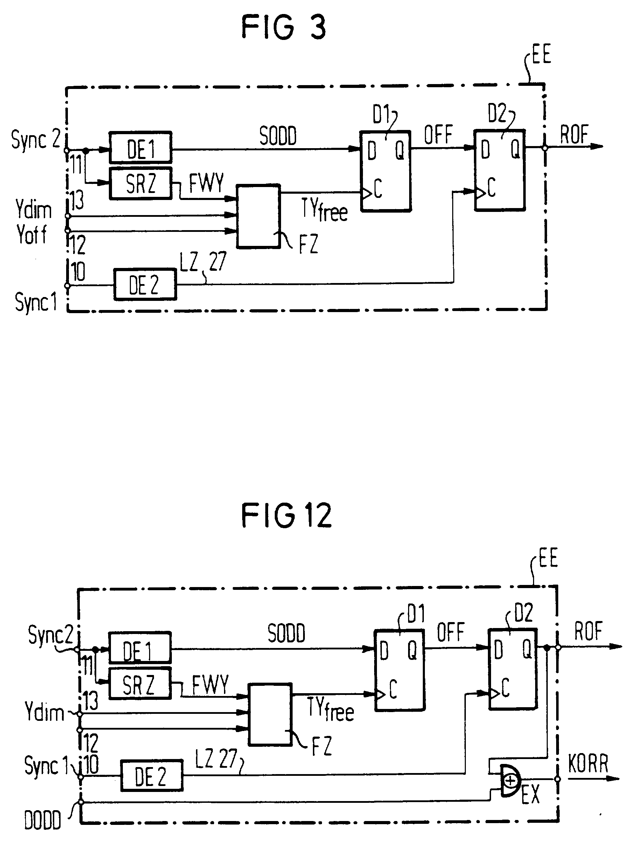

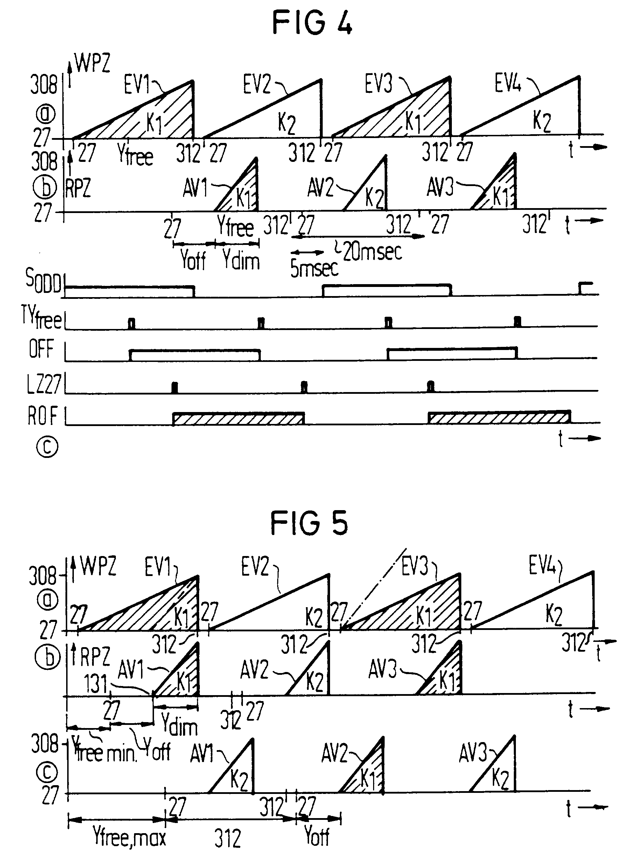

FIG 3 zeigt die detaillierte Schaltungsanordnung der Entscheidungseinrichtung EE, deren Funktion anhand der nachfolgenden FIG 4, 5 und 6 erläutert wird, in ihren Einzelheiten. Die Entscheidungseinrichtung EE weist eine Eingangsklemme 10 zum Anlegen eines Synchronsignales Sync 1 der ersten Videoquelle Q1, eine zweite Eingangsklemme 11 zum Anlegen eines Synchronsignales Sync 2 der zweiten Videoquelle Q2, eine Eingangsklemme 12 für ein Signal $Y_{off}$, das die Lage des Kleinbildes K im Hauptbild H anzeigt, sowie in diesem Ausführungsbeispiel eine vierte Eingangsklemme 13 für ein Signal $Y_{dim}$ auf, das in Abhängigkeit der Größe des einzublendenden Kleinbildes gewählt ist. Die erste Eingangsklemme 10 für das Synchronsignal Sync 1 des Hauptbildes H ist mit einer Einrichtung DE 2 verbunden, an deren Ausgang ein Signal LZ 27 abgreifbar ist, das den Beginn einer ersten auf einem Bildschirm sichtbaren Bildzeile des Hauptbildes H anzeigt. Darüber hinaus weist die Entscheidungseinrichtung EE eine Logikanordnung auf, die nach Maßgabe dieses Signales LZ 27 das Entscheidungssignal ROF bereitstellt. Die Logikanordnung verfügt über ein erstes D-Flip-Flop D1, an deren Q-Ausgang Q ein Signal OFF abgreifbar ist, das dem Dateneingang D eines zweiten D-Flip-Flops D2 zugeführt wird. Dieses zweite D-Flip-Flop D2 hat einen Takteingang C, an den das Signal LZ 27 zugeführt wird. Am Q-Ausgang Q dieses zweiten D-Flip-Flops D2 ist das Entscheidungssignal ROF abgreifbar, das festlegt, aus welchem der beiden Speicherbereiche SP1, SP2 ein gespeichertes Halbbild K1, K2 auszulesen ist.

Das erste D-Flip-Flop D1 verfügt über einen Dateneingang D, der ein Signal SODD empfängt, das anzeigt, ob ein soeben in die Speichereinrichtung SP einzuschreibendes Halbbild des Kleinbildes K ein ungerades oder gerades Halbbild ist. Der Takteingang C dieses ersten D-Flip-Flops D1 erhält ein vorgebbares Freigabesignal $TY_{free}$, das am Ausgang eines Freigabezeitpunktdetektors FZ abgreifbar ist. Der Freigabezeitpunktdetektor FZ ist mit den Eingangsklemme 12 und 13 der Entscheidungseinrichtung EE in Verbindung und erhält zusätzlich ein Signal FWY, das am Ausgang eines an die zweite Eingangsklemme 11 geschalteten Schreibrahmenzählers SRZ abgreifbar ist. An die zweite Eingangsklemme 11 der Entscheidungseinrichtung EE ist darüber hinaus eine weitere Detektoreinrichtung DE1 geschaltet, an deren Ausgang das Signal SODD anliegt, das anzeigt, ob ein gerade in die Speichereinrichtung eingeschriebenes Halbbild des Kleinbildes ein ungerades oder gerades Halbbild ist. Wie weiter unten noch näher ausgeführt werden wird, dient der Freigabezeitpunktdetektor FZ zum Generieren des Freigabesignales $TY_{free}$, wobei für verschiedene Bereiche von möglichen Lagen des Kleinbildes K im Hauptbild H jeweils nur ein Freigabesignal $TY_{free}$ bereitgestellt wird.

In FIG 4 wird anhand von sogenannten Zeilenindexdiagrammen für den Schreib- und Lesebetrieb der Speichereinrichtung das erfindungsgemäße Verfahren deutlich. Auf der Ordinate sind über der Zeit t die Zeilennummern der in die Speicherbereiche SP1, SP2 einzuschreibenden bzw. daraus wieder auszulesenden ungeraden und geraden Halbbilder $K_1$, $K_2$ des Kleinbildes aufgetragen und zwar in Koordinaten des Hauptbildes. Der Einfachheit halber wird angenommen, daß jedes Halbbild aus 312 (statt 312,5) Zeilen besteht und die erste sichtbare Zeile auf dem Bildschirm durch die 27. Zeile eines Halbbildes gebildet wird.

FIG 4a zeigt den zeitlichen Verlauf des Einschreibens der Halbbilder $K_1$, $K_2$ des Kleinbildes in die Speicherbereiche SP1, SP2. Zunächst wird das erste ungerade Halbbild $K_1$ in den ersten Speicherbereich SP1 und anschließend das erste gerade Halbbild K2 in den zweiten Speicherbereich SP2 eingeschrieben. Danach gelangt das zweite ungerade Halbbild K1 in den ersten Speicherbereich SP1 und das zweite gerade Halbbild K2 in den zweiten Speicherbereich SP2 usw. Das Einschreiben dieser Halbbilder $K_1$, $K_2$ erfolgt nach Maßgabe von Synchronsignalen der das zweite Kleinbild zur Verfügung stellenden zweiten Videoquelle Q2. Die Abszisse in FIG 4a bezeichnet die Zeilennummer der in die ersten und zweiten Speicherbereiche SP1, SP2 aktuell eingeschriebenen Zeilen der Halbbilder $K_1$, $K_2$. Die jeweils ansteigenden Geraden in FIG 4a werden im folgenden als Einschreibvektoren EV1, EV2, EV3 und EV4 bezeichnet.

In FIG 4b ist der zeitliche Verlauf für die Bedingung des Auslesens der gespeicherten Halbbilder K1, K2 dargestellt, wobei zunächst noch offen ist, aus welchem der beiden Speicherbereiche SP1, SP2 ein Halbbild auszulesen ist. Auf der Ordinate sind über der Zeit t wieder die Zeilennummern des Hauptbildes aufgetragen, während die Abszisse diejenigen Zeilen des ersten oder zweiten Speicherbereiches SP1, SP2 bezeichnet, aus denen gerade das gespeicherte Halbbild ausgelesen wird, also die Zeilenindizes des eingeschriebenen Kleinbildes.

Setzt man voraus, daß das einzublendende Halbbild mit der Größe $Y_{dim}$ an einer Stelle $Y_{off}$ des Hauptbildes eingeblendet werden soll, so ergeben sich das in FIG 4b dargestellten Zeilenindexdiagramm, wenn gilt, daß das einzublendende Kleinbild 94 Zeilen, also $Y_{dim} = 94$, hoch sein und ab der 104. Zeile, also $Y_{off} = 104$, in das Hauptbild eingeblendet werden soll. Die jeweils ansteigenden Geraden in FIG 4b werden im folgenden als Auslesevektoren AV1, AV2, AV3 bezeichnet. Der zeitliche Versatz der Zeilen 27 bis 312 zwischen den Figuren 4a und 4b beruht darauf, daß die erste und zweite Videoquelle Q1, Q2 hinsichtlich ihrer Synchronsignale eine Phasenverschiebung aufweisen.

Durch die Entscheidungseinrichtung EE werden unter den in FIG 4a und b aufgezeigten Schreib- und Lesebedingungen die bereits obenerwähnten Signale SODD, $TY_{free}$, LZ27 sowie das Entscheidungssignal ROF generiert. Darüber hinaus liegt am Ausgang des ersten D-Flip-Flops D1 das Signal OFF mit einer Taktperiode von 40 msec an, das alle 20 msec seine Polarität mit dem Erscheinen des Signales $TY_{free}$ wechselt und anzeigt, ob es sich bei dem zum letzten Zeitpunkt $TY_{free}$ in den ersten Speicherbereich SP1 oder zweiten Speicherbereich SP2 eingeschriebenem Halbbild des Kleinbildes um ein ungerades Halbbild $K_1$ oder ein gerades Halbbild $K_2$ handelt. Das am Ausgang der Entscheidungseinrichtung EE abgreifbare Entscheidungssignal ROF bestimmt schließlich, aus welchem der beiden Speicherbereiche SP1 oder SP2 ein gespeichertes Halbbild zur Bild-im-Bild-Einblendung heranzuziehen ist.

In unserem Ausführungsbeispiel der Entscheidungseinrichtung EE nach FIG 3 ist bei einem Entscheidungssignal ROF = 1 aus der ersten Speichereinrichtung SP1 das zuvor gespeicherte ungerade Halbbild $K_1$ und entsprechend bei einem Entscheidungssignal ROF = 0 aus dem zweiten Speicherbereich SP2 das darin gespeicherte gerade Halbbild auszulesen. In FIG 4c heißt dies, daß zum bildschnittfreien Einblenden des Kleinbildes in das Hauptbild mit dem Auslesen des ersten Speicherbereiches SP1 begonnen werden muß. Da das Entscheidungssignal ROF bereits zu Beginn des Signales LZ27 vorliegt, wird also zu Beginn der ersten auf dem Bildschirm sichtbaren Bildzeile schon festgelegt, welche der beiden Speicherbereich SP1, SP2 zum Auslesen aktiviert werden muß. Maßgeblich für eine einwandfreie Funktion der Entscheidungseinrichtung EE nach FIG 3 ist die richtige Festlegung der Zeitpunkte, an denen das Freigabesignal $TY_{free}$ einen Impuls bereitstellen muß. Durch das Freigabesignal $TY_{free}$ wird nämlich das Signal OFF festgelegt. Das Freigabesignal $TY_{free}$, das jeweils einen Impuls am Beginn einer Zeile $Y_{free}$ im Vertikalsynchronrahmen der zweiten Videoquelle Q2 aufweisen soll, ist von der Lage $Y_{off}$ des gerade in das Hauptbild einzublendenden Halbbildes des Kleinbildes abhängig.

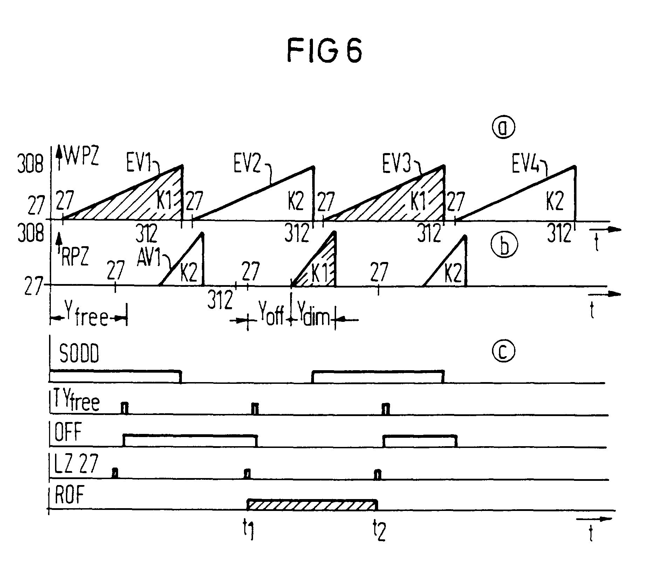

Anhand von FIG 5 ist dargestellt, welche Randbedingungen an die Lage der Bewertungszeitpunkte $Y_{free}$ zu stellen sind, um die geforderte bildschnittfreie Einblendung des Kleinbildes zu ermöglichen. $Y_{free}$ ist so zu legen, daß sich keine Überschneidung von Einschreibvektoren EV1, EV2, EV3, EV4 und Ausschreibvektoren AV1, AV2, AV3 für einen Speicherbereich SP1 bzw. SP2 ergibt. Damit gelten die in FIG 5 b und c dargestellten Grenzfälle für den Bewertungszeitpunkt $Y_{free}$, wobei FIG 5a wieder die Einschreibvektoren EV1, EV2, EV3 und EV4 zeigt.

In FIG 5b ist die zeitliche Bedingung für ein frühestmögliches bildschnittfreies Auslesen eines ungeraden Halbbildes K1 aus dem ersten Speicherbereich SP1 dargestellt. Wie in FIG 5a die strichlinierte Linie zeigt, schneidet sich der erste Einschreibvektor EV1 gerade nicht mit dem ersten Auslesevektor AV1, während FIG 5c die zeitlichen Verhältnisse für ein spätest möglichstes bildschnittfreies Auslesen eines zuvor gespeicherten ungeraden Halbbildes K1 aus dem ersten Speicherbereich SP1 zeigt (vgl. dazu die strichpunktierte Linie in FIG 5a).

Wie aus FIG 5b und c deutlich hervorgeht, gelten also folgende Randbedingungen für den Bewertungszeitpunkt $Y_{free}$: Der frühest mögliche Bewertungszeitpunkt $Y_{free, min}$ bestimmt sich durch die Beziehung

$$Y_{free, min} + Y_{off} + Y_{dim} > 312$$

und der spätest mögliche Bewertungszeitpunkt $Y_{free, max}$ durch

$$Y_{free, max} + 312 + Y_{off} < 624.$$

Damit muß der Bewertungszeitpunkt $Y_{free}$ zwischen folgenden beiden Bereichen liegen.

$$312 - Y_{off} - Y_{dim} < Y_{free} < 312 - Y_{off}.$$

Wird beispielsweise angenommen, daß das Kleinbild um den Faktor 3 kleiner als das Hauptbild und damit 94 Zeilen hoch sein soll, bei einem Hauptbild mit 282 Zeilen, also $Y_{dim}$ = 94 ist, so gilt in Abhängigkeit von der jeweiligen Lage $Y_{off}$ des gerade einzublendenden Kleinbildes folgende Tabelle.

| $Y_{off}$ | $Y_{free, min}$ | $Y_{free, max}$ | $Y_{free}$ |
|---|---|---|---|
| 0...63 | 155...218 | 249...312 | 218...249 → 240 |
| 64...127 | 91...154 | 185...248 | 154...185 → 176 |
| 128...183 | 35...90 | 129...184 | 90...129 → 112 |
| 184...255 | ...34 | 57...128 | 34...57 → 48 |

Wie dieser Tabelle weiter zu entnehmen ist, reichen für Kleinbilder dieser Dimension also insgesamt vier verschiedene Freigabezeitpunkte, hier beispielhaft $Y_{free}$ = 240, 176, 112 und 48 aus, je nach dem wo das Kleinbild im Hauptbild eingeblendet werden soll. Wird im Freigabezeitpunktdetektor FZ von FIG 3 eine Dekodierung nach dieser Tabelle vorgenommen, so reichen die höchstwertigen zwei Binärstellen von $Y_{off}$ zur Programmierung des Freigabezeitpunktdetektors FZ aus, um das Freigabesignal $TY_{free}$ zu generieren.

In FIG 6 wird das erfindungsgemäße Verfahren an einem weiteren Beispiel veranschaulicht. FIG 6a zeigt wieder die Einschreibevektoren EV1, EV2, EV3 und EV4, die das Einschreiben der ungeraden und geraden Halbbilder $K_1$, $K_2$ des Kleinbildes in den ersten und zweiten Speicherbereich SP1, SP2 darstellen. Die zeitlichen Bedingungen zum Auslesen dieser gespeicherten Halbbilder $K_1$, $K_2$ ergibt sich aus FIG 6b. Das Kleinbild hat wieder die Dimension $Y_{dim} = 94$ und soll ab der 104. Zeile des Hauptbildes mit seiner ersten Zeile beginnend, also $Y_{off} = 104$, eingeblendet werden. Für den Bewertungszeitpunkt $Y_{free}$ gilt gemäß der oben angegebenen Tabelle $Y_{free} = 176$ (in FIG 4 war $Y_{free}$ auch 176). Damit erzeugt der Freigabezeitpunktdetektor FZ ein Freigabesignal $TY_{free}$, das jeweils einen Impuls mit dem Einlesen der 176. Zeile in den ersten oder zweiten Speicherbereich SP1, SP2 aufweist.

Die zur Entscheidungseinrichtung EE gehörenden Signalverläufe sind in FIG 6c zusehen. Das Signal SODD, das anzeigt, ob ein gerades oder ungerades Halbbild $K_1$, $K_2$ in einen der Speicherbereiche SP1, SP2 eingeschrieben wird, hat die Periodendauer von 40 msec, das alle 20 msec seine Polarität ändert. Die Abtastung des Signales SODD an den vom Freigabesignal $TY_{free}$ festgelegten Zeitpunkten ergibt das Signal OFF mit der Periodendauer von ebenfalls 40 msec, das alle 20 msec seine Polarität mit dem Auftreten eines Impulses des Freigabesignales $TY_{free}$ ändert. Das so gewonnene Signal OFF wird als Entscheidungskriterium für das Auslesen aus dem ersten oder zweiten Speicherbereich SP1, SP2 herangezogen. Dies geschieht durch Abtastung des Signales OFF mit dem Signal LZ27, das den Beginn eines Halbbildes im Hauptbild festlegt. Das Signal LZ27 wird in der Detektoreinrichtung DE2 aus einem synchron mit dem Hauptbild laufenden Leserahmenzähler erzeugt, wozu der Detektoreinrichtung DE2 Synchronsignale, hier das Vertikalsynchronsignal und Horizontalsynchronsignal der ersten Videoquelle Q1 zugeführt werden. Die Abtastung des Signales OFF an den durch das Auftreten der Impulse des Signales LZ27 bestimmten Zeiten führt schließlich zu dem gewünschten Entscheidungssignal ROF, das festlegt, aus welchen der beiden Speicherbereiche SP1 oder SP2 ausgelesen werden muß, um die geforderte joint-line-freie Einblendung des Kleinbildes in das Hauptbild zu ermöglichen. Das Entscheidungssignal ROF ist synchron zum Leserahmen und ändert seine Polarität zu Beginn der Zeile 27 eines Halbbildes des Hauptbildes. In FIG 6c steht zum Zeitpunkt $t_1$, also zu Beginn der Zeile 27 im Hauptbild bereits fest, daß der erste Speicherbereich SP1 zur bildschnittfreien Einblendung ausgelesen werden muß, da ab da das Entscheidungssignal ROF = 1 ist. Ab dem Zeitpunkt $t_2$ muß der zweite Speicherbereich SP2 ausgelesen werden, in dem vereinbarungsgemäß ein gerades Halbbild K2 gespeichert ist.

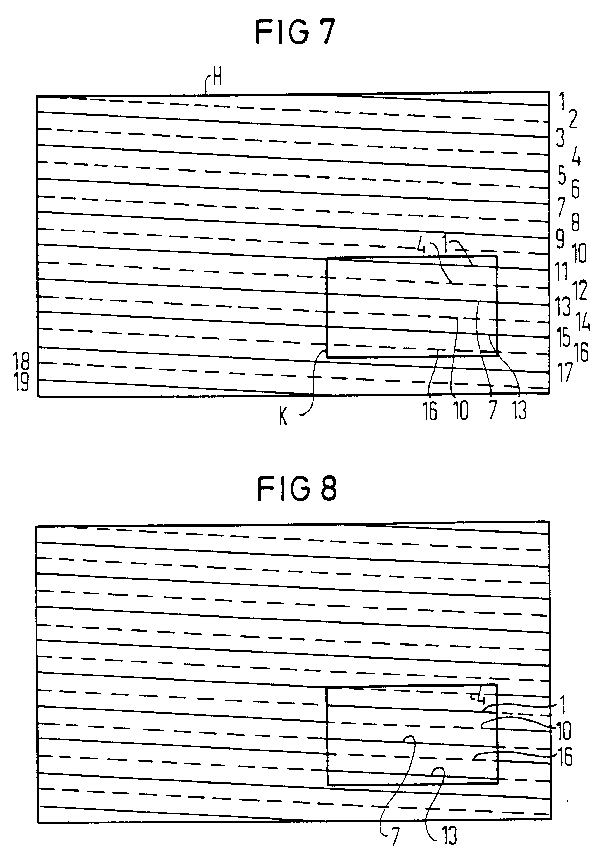

Bei dem bisher beschriebenen Verfahren zur Bild-im-Bild-Einblendung legt das Entscheidungssignal ROF fest, aus welchen der beiden Speicherbereiche das zuvor gespeicherte Halbbild ausgelesen werden muß und zwar unabhängig davon, ob das gespeicherte Halbbild ein ungerades oder gerades Halbbild ist. Wird zufällig ein gerades Halbbild des Kleinbildes in ein gerades Halbbild des Hauptbildes eingeblendet bzw. ein ungerades Halbbild des Kleinbildes in ein ungerades Halbbild des Hauptbildes, so treten keine weiteren Probleme auf. Sieht dagegen das Entscheidungssignal ROF vor, ein gerades Halbbild $K_2$ des Kleinbildes in ein ungerades Halbbild $H_1$ des Hauptbildes bzw. ein ungerades Halbbild $K_1$ in ein gerades Halbbild $H_2$ des Hauptbildes einzublenden, treten ohne zuvor getroffene Korrekturmaßnahmen Zeilensprunginversionen auf, die eine unverwünschte Bildverwürfelung zur Folge haben. Eine solche als interlacefalsche Darstellung des Kleinbildes bezeichnete Kleinbildstörung ist natürlich unerwünscht. Anhand der nachfolgenden Figuren 7, 8, 9 und 10 wird das Problem der Zeilensprunginversionen deutlich. Der Einfachheit halber werden anstelle der üblichen 625 Bildzeilen eines Hauptbildes nur 19 Bildzeilen dargestellt und entsprechend auch weniger Bildzeilen für das Kleinbild K.

FIG 7 zeigt, wie bei einer interlacerichtigen Darstellung des Kleinbildes K in das ungerade Halbbild des Hauptbildes H mit den Zeilen 1, 3 und 5 usw. ein um den Faktor 3 verkleinertes Kleinbild mit seinen ungeraden Zeilen 1, 7 und 13 eingeblendet ist. In das gerade Halbbild des Hauptbildes H mit den Zeilen 2, 4, 6 usw. Ist das Kleinbild mit seinen geraden Zeilen 4, 10 und 16 eingeblendet.

Tritt dagegen der Fall auf, daß ein ungerades Halbbild $K_1$ des Kleinbildes K mit seinen Zeilen 1, 7 und 13 in das Halbbild $H_2$ des Hauptbildes H mit den geraden Zeilen eingeblendet wird und das gerade Halbbild $K_2$ des Kleinbildes K mit den Zeilen 4, 10, 16 in das ungerade Halbbild des Hauptbildes H, so wird das Kleinbild K interlacefalsch dargestellt (FIG 8). Die Folge ist eine Bildverwürfelung im Kleinbild, wie anhand einer diagonalen Linie im Kleinbild leicht vorstellbar ist. In diesem Fall wird gemäß einer Weiterbildung der Erfindung in der in FIG 1 bereits vorgestellten Korrektureinrichtung KE eine Zeilenkorrektur im Kleinbild durchgeführt.

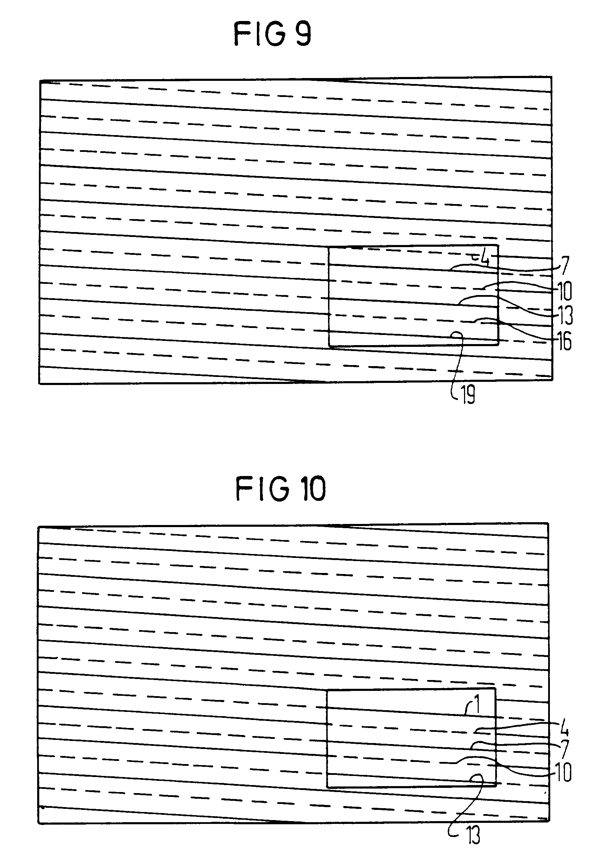

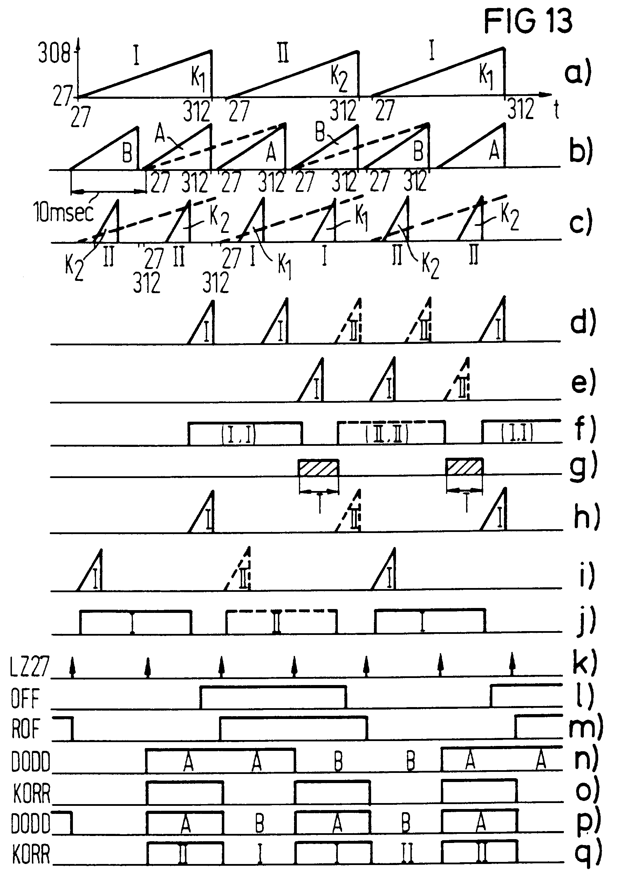

Die Korrektureinrichtung KE ist dazu geeignet, sowohl ein ungerades Halbbild $K_1$ des Kleinbildes K, das zur Einblendung in ein ungerades oder gerades Habbild $H_1$, $H_2$ des Hauptbildes H vorgesehen ist, als auch ein gerades Halbbild $H_2$ des Kleinbildes K, das zur Einblendung in ein gerades Halbbild $H_2$ des Hauptbildes H vorgesehen ist, unverändert, und ein gerades Halbbild $K_2$ des Kleinbildes K, das zur Einblendung in ein ungerades Halbbild $H_1$ des Hauptbildes H vorgesehen ist, um eine Halbbildzeile nach unten versetzt der Entscheidungseinrichtung EE zuzuführen. Das interlacekorrigierte Kleinbild K hat dann die in FIG 10 dargestellte Zeilenfolge.

Es ist aber genausogut möglich, daß die Korrektureinrichtung KE geeignet ist, sowohl ein gerades Halbbild $K_2$ des Kleinbildes K, das zur Einblendung in ein ungerades oder gerades Halbbild $H_1$, $H_2$ des Hauptbildes H vorgesehen ist, als auch ein ungerades Halbbild $H_1$ des Kleinbildes $K_1$ das zur Einblendung in ein ungerades Halbbild $H_1$ des Hauptbildes

H vorgesehen ist, unverändert und ein ungerades Halbbild $K_1$ des Kleinbildes K, das zur Einblendung in ein gerades Halbbild $H_2$ des Hauptbildes H vorgesehen ist, um eine Halbbildzeile nach oben versetzte Entscheidungseinrichtung EE zuführen. Ein derartiges interlacekorrigiertes Kleinbild zeigt die FIG 9.

Mit dem bisher beschriebenen erfindungsgemäßen Verfahren und der dazugehörenden Einrichtung ist also eine störungsfreie Kleinbildeinblendung in ein Hauptbild möglich. Beim eingeblendeten Kleinbild tritt erfindungsgemäß kein Bildschnitt auf. Da die Videosignalquelle in diesem Ausführungsbeispiel Videosignale nach dem Zeilensprungverfahren zur Verfügung stellten, war eine Korrektureinrichtung KE notwendig, die eine Zeilenverwürfelung korrigieren kann.

Eine Weiterbildung der Erfindung sieht vor, daß die Speichereinrichtung mehr als zwei Kleinbilder speichern kann, insbesondere daß die Speichereinrichtung einen Speicherbereich aufweist, der zum Speichern eines gesamten Hauptbildes bzw. eines Halbbildes des Hauptbildes geeignet ist. Die Kapazität der Speichereinrichtung kann z. B. derart gewählt werden, daß 288 Zeilen mal 720 Bildpunkte gespeichert werden können und damit ein gesamtes Halbbild des Hauptbildes. Erfindungsgemäß wird der erste Speicherbereich SP1 in dem für die linke Bildhälfte vorgesehenen Speicherteil und der zweite Speicherbereich SP2 in den für die rechte Bildhälfte vorgesehenen Speicherteil SPR der Speichereinrichtung SP gelegt. Dies hat den Vorteil, daß mit dem Synchronrahmen des Hauptbildes ein synchrones Auslesen der gesamten Speichereinrichtung und damit in einfacher Weise eine Bild-im-Bild-Einblendung erfolgen kann. Darüber hinaus ist das Einblenden des Kleinbildes durch in die Speichereinrichtung SP eingeschriebene Markierungskennzeichnungen möglich, wie dies grundsätzlich in dem EP 0 357 813 AI vorgeschlagen wurde, auf die hier zum Zwecke der Offenbarung ausdrücklich verwiesen wird. Voraussetzung dafür ist, daß in Horizontalrichtung das einzublendende Kleinbild entweder aus dem einen Speicherteil SPL oder aus dem anderen Speicherteil SPR ausgelesen und zur Darstellung gebracht wird. Die Auswahl des richtigen Speicherbereiches SP1 bzw. SP2 erfolgt wieder mittels dem Entscheidungssignal ROF.

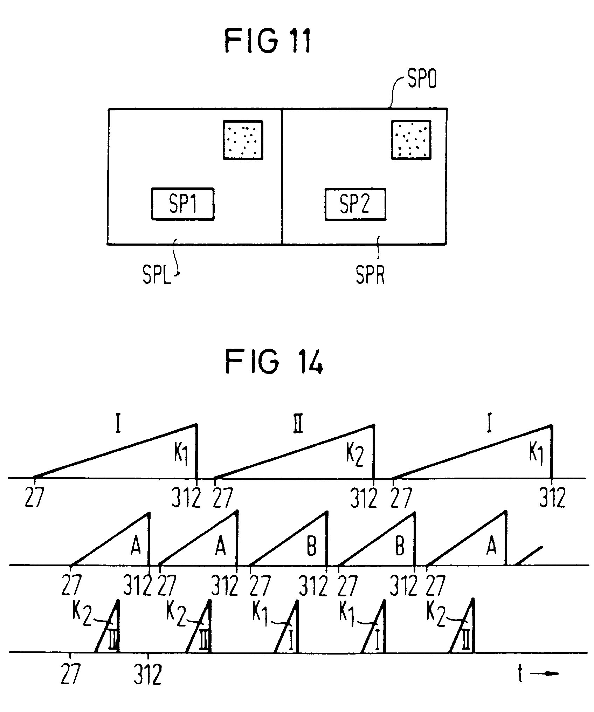

Mit einer derartigen Speichereinrichtung ist es möglich, neben einem bewegten Kleinbild noch weitere Kleinbilder, die Standbilder sind, in die Speichereinrichtung einzuspeichern und zur Darstellung zu bringen. Im einfachsten Fall werden auch diese Kleinbilder mit der Vertikalauflösung zweier Halbbilder dargestellt. Dazu werden die zu einer Videosignalquelle gehörenden Kleinbilder im ersten und zweiten Speicherbereich abwechselnd ausgelesen, indem der gesamte jeweilige Speicherteil ausgelesen wird. Dazu ist es aber erforderlich, daß vor dem Auslesen der Speichereinrichtung entschieden wird, welcher der Speicherbereiche SP1 oder SP2 aktiv sein soll. In FIG 11 ist der Speicherbereich für ein Kleinbild mit unbewegtem Bildinhalt punktiert gekennzeichnet.

In einer Weiterbildung der Erfindung ist es vorgesehen, das Hauptbild und das in das Hauptbild einzublendende Kleinbild mit einer im Vergleich zur ursprünglichen Bildfolgefrequenz bzw. Halbbildfolgefrequenz doppelten Bildfolgefrequenz bzw. Halbbildfolgefrequenz darzustellen. Mit der doppelten Bildfolgefrequenz von beispielsweise 100 Hz kann das Fernsehbild flimmerfrei gefrei gestaltet werden.

Je nach dem welche Bildrasterfolge das Hauptbild aufweist, also AABB oder ABAB, wobei A und B die Rasterlage eines Bildes bzw. eines Halbbildes bezeichnet (A = gerades Halbbild, B = ungerades Halbbild) - wird erfindungsgemäß ein Identifikationssignal DODD zum Erkennen der augenblicklichen Rasterlage des Hauptbildes generiert und abhängig davon ein Rasterkorrektursignal KORR erzeugt. Das Rasterkorrektursignal KORR löst dann eine Rasterkorrektur bei dem aus dem festgelegten Speicherbereich, aus dem das Halbbild auszulesen ist, aus.

Um die Bild-im-Bild-Einblendung auch bei doppelter Halbbild- bzw. Bildfolgefrequenz zu gewährleisten, wird die in FIG 3 bereits vorgestellte Entscheidungseinrichtung EE entsprechend der Schaltung nach FIG 12 modifiziert.

In dieser Entscheidungseinrichtung EE ist jetzt zusätzlich ein EXOR-Glied EX vorgesehen, an dessen Ausgangsklemme das Korrektursignal KORR abgreifbar ist. Dieses Korrektursignal KORR löst eine Rasterkorrektur bei dem aus dem ausgewählten Speicherbereich auszulesendem Halbbild aus. An den beiden Eingängen des EXOR-Gliedes liegt zum einen das Entscheidungssignal ROF, zum anderen ein Identifikationssignal DODD zum Erkennen der augenblicklichen Rasterlage des Hauptbildes an.

Das erfindungsgemäße Verfahren zur Bild-im-Bild-Einblendung mit doppelter Halbbild- bzw. Bildfolgefrequenz wird anhand der FIG 13 und 14 näher erläutert, wo wieder Zeilenindexdiagramme für das Einschreiben und Auslesen der Halbbilder des Kleinbildes sowie die zur Entscheidungseinrichtung von FIG 12 gehörenden Signalverläufe dargestellt sind.

In FIG 13 ist das erfindungsgemäße Verfahren bei der Bild-im-Bild-Einblendung mit doppelter Bildfolgefrequenz, also ABAB bzw. doppelter Halbbildfolgefrequenz AABB dargestellt. Anhand von Zeilenindexdiagrammen werden wieder die Randbedingungen für das frühest mögliche und spätest mögliche Auslesen der im ersten Speicherbereich oder zweiten Speicherbereich gespeicherten Halbbilder des Kleinbildes aufgezeigt und abhängig davon diejenigen Zeitbereiche erfaßt, in denen das Auslesen aus dem ersten oder zweiten Speicherbereich nicht zulässig ist. Anschließend wird anhand der Signalverläufe in der Entscheidungseinrichtung nach FIG 12 das Bereitstellen des Korrektursignales KORR so wie das Entscheidungssignal ROF erläutert.

Zur FIG 13 im Einzelnen: FIG 13a zeigt wieder die Einschreibvektoren, die das Einschreiben der Halbbilder K1, K2 des Kleinbildes in den ersten und zweiten Speicherbereich kennzeichnen. Auf der Abzisse ist wieder die Zeit in Zeilennummern des Hauptbildes aufgetragen, während die Ordinate die Zeile angibt, die gerade in einen der beiden Speicherbereiche eingeschrieben wird. In FIG 13a ist angenommen, daß zuerst ein ungerades Halbbild $K_1$ des Kleinbildes in den jetzt mit I bezeichneten ersten Speicherbetrieb, anschließend ein gerades Halbbild $K_2$ in den mit II bezeichneten zweiten Speicherbereich und dann anschließend wieder ein nachfolgendes ungerades Halbbild $K_1$ in die erste Speichereinrichtung I usw. eingeschrieben wird.

FIG 13b zeigt die Auslesevektoren für ein Hauptbild, das mit doppelter Halbbildfrequenz und damit der Rasterlage AABB (A = ungerades Halbbild, B = gerades Halbbild) dargestellt werden soll (die strichlierten Geraden in FIG 13b bezeichnen die verhältnisse bei einfacher Halbbildfrequenz). Hier auch von Auslesevektoren zu sprechen, ist insofern angebracht, als zur Halbbildfrequenzverdopplung (wie auch zur Bildfrequenzverdopplung) ein Bildspeicher für das Hauptbild vorgesehen werden muß, aus dem das Hauptbild im Vergleich zur Einschreibgeschwindigkeit zweimal mit doppelter Auslesegeschwindigkeit ausgelesen werden muß. Da die Videoquellen für das Kleinbild und Hauptbild voneinander unabhängig sind, tritt der bereits weiter oben erwähnte Phasenunterschied in den Synchronlagen von Hauptbild und Kleinbild auf.

Die FIG 13c veranschaulicht die zeitlichen Bedingungen für das Auslesen der in den beiden Speicherbereichen I, II gespeicherten Halbbilder des Kleinbildes, wenn wieder angenommen wird, daß das Kleinbild 94 Zeilen hoch sei und an der 104. Zeile des Hauptbildes beginnend eingeblendet werden soll. Die Bedingung für eine bildschnittfreie Einblendung des Kleinbildes in das Hauptbild ist wieder, daß sich Auslesevektoren und Einschreibvektoren eines Speicherbereiches nicht überschneiden dürfen. Wie in FIG 13c im Zusammenhang mit den aus FIG 13a übernommenen und strichliert dargestellten Einschreibvektoren deutlich ergibt, muß demnach zunächst das im zweiten Speicherbereich II gespeicherte gerade Halbbild $K_2$ zweimal ausgelesen werden. Anschließend ist zweimal das ungerade Halbbild $K_1$ aus dem ersten Speicherbereich I auszulesen. Danach wird das nächstfolgende gerade Halbbild $K_2$ zweimal aus dem zweiten Speicherbereich II ausgelesen.

Wie ein Vergleich der Figuren 13b und 13c ergibt, tritt das Problem auf, daß in das erste ungerade Halbbild A des Hauptbildes das zweite ausgelesene gerade Halbbild $K_2$ des Kleinbildes zur Einblendung vorgesehen ist, in das zweite ungerade Halbbild A des Hauptbildes das erste ungerade Halbbild $K_1$ des Kleinbildes, in das an das zweite ungerade Halbbild A anschließende gerade Halbbild B des Hauptbildes das zweite ungerade Halbbild $K_1$ des Kleinbildes usw.

Um eine rasterrichtige Bild-im-Bild-Einblendung zu gewährleisten, ist es demnach notwendig, bei dem Ausführungsbeispiel nach FIG 13, die zum zweiten Mal aus dem ersten Speicherbereich I ausgelesenen ungeraden Halbbilder $K_1$ in die Rasterlage B, also in ein gerades Halbbild und ein zum zweiten Mal aus dem zweiten Speicherbereich II ausgelesenes gerades Halbbild $K_2$ in die Rasterlage A, also in ein ungerades Halbbild zu transformieren. Idealerweise würde diese Transformation durch eine Phasenverschiebung um 180°, beispielsweise mittels eines Allpasses, durchgeführt. Aus Aufwandsgründen wird man jedoch eine lineare oder nichtlineare Filterung niedriger Ordnung vorsehen, z. B. eine lineare Interpolation übereinanderliegender Bildpunkte.

Weisen dagegen das Hauptbild und das Kleinbild die in FIG 14 dargestellten Synchronlagen auf, so tritt die Situation auf, daß die obenerwähnte Transformation nicht notwendig ist. Dort weisen die aus den Speicherbereichen I und II ausgelesenen Halbbilder schon die richtige Rasterlage auf.

Es ist daher notwendig, ein Signal zu generieren, das anzeigt, ob eine Rasterkorrektur im einzublendenden Halbbild eines Kleinbildes notwendig ist oder nicht. Um ein solches Korrektursignal generieren zu können ist, muß man die Randbedingungen für das frühest mögliche und spätest mögliche Auslesen eines Halbbildpaares kennen. FIG 13d zeigt die zeitlichen Verhältnisse für ein frühest mögliches Auslesen des Halbbildpaares $K_1$, $K_1$ bzw. $K_2$, $K_2$ aus den Speicherbereichen I und II und FIG 13e den spätest möglichen Zeitpunkt, wobei die Randbedingungen wieder durch die Forderung der Bildschnittfreiheit gegeben sind (vgl. dazu FIG 13a in Verbindung mit FIG 13d bzw. FIG 13e). Aus diesen beiden Randbedingungen ergeben sich die in FIG 13f dargestellten Bereiche, in denen aus dem ersten Speicherbereich I und dem zweiten Speicherbereich II die gespeicherten Halbbilder des Kleinbildes paarweise ausgelesen werden dürfen, wobei jedoch Zeitabschnitte T auftreten, in denen weder aus dem ersten noch zweiten Speicherbereich Halbbilder zu Auslesen freigegeben werden dürfen. In diesen Zeitbereichen T (vgl. FIG 13g) funktioniert folglich eine Bild-im-Bild-Einblendung durch Korrektur der Rasterlage nicht.

In FIG 13h und 13i sind die frühest möglichen und spätest möglichen Zeiträume aufgezeigt, in denen die Speicherbereiche I bzw. II ausgelesen werden dürfen, jetzt allerdings ohne der Bedingung des Auslesens von Paaren von Halbbildern wie in FIG 13d und 13e. In FIG 13j sind diejenigen Zeiträume dargestellt, in denen der Start des Lesens aus dem ersten Speicherbereich I bzw. zweiten Speicherbereich II nicht erlaubt ist. Aus FIG 13j geht hervor, daß es prinzipiell immer möglich sein muß, den ersten Speicherbereich I oder zweiten Speicherbereich II auszulesen. Aus dem Vergleich der Figuren 13f und 13j ergibt sich, daß nicht für alle Synchronlagen entweder das Verfahren mit Rasterkorrektur oder das im Zusammenhang mit FIG 14 vorgestellte Verfahren mit rasterrichtiger Wiederholung der Halbbilder realisieren läßt. Es muß daher erfindungsgemäß - je nach Synchron- und Rasterlage - zwischen dem einen Verfahren (vgl. FIG 14) ohne Korrektur der Rasterlage und dem anderen Verfahren mit Rasterkorrektur umgeschaltet werden.

FIG 13k zeigt wieder das Signal LZ27, das den Beginn der Zeile 27 im Hauptbild feststellt. Wie im Zusammenhang mit den FIG 4 und 6 bereits eingehend erläutert, wird in der Entscheidungseinrichtung EE wieder das Signal OFF und das Entscheidungssignal ROF generiert (vgl. FIG 13l und FIG 13m). Zusätzlich wird der Entscheidungseinrichtung EE von FIG 11 ein Identifikationssignal DODD zur Verfügung gestellt, das die augenblickliche Rasterlage des Hauptbildes identifiziert. Der Verlauf dieses Identifikationssignales DODD zeigt FIG 13n. Über eine EXOR-Verknüpfung des Entscheidungssignales ROF und des Identifikationssignales DODD wird ein Rasterkorrektursignal KORR, das für dieses Ausführungsbeispiel in FIG13o dargestellt ist, bereitgestellt. Dieses Rasterkorrektursignal KORR zeigt an, ob aus dem aus dem festgelegten Speicherbereich I, II ausgelesenem Halbbild $K_1$, $K_2$ des Kleinbildes eine Rasterkorrektur vorgenommen werden muß oder nicht. Für den Fall, daß das Rasterkorrektursignal KORR = 1 ist, ist eine Korrektur vorzunehmen, während bei KORR = 0 keine Korrektur der Rasterlage im ausgelesenen Halbbild des Kleinbildes vorzunehmen ist. Es versteht sich von selbst, daß bei einer gegenüber FIG 13b um 10 msec nach rechts oder links verschobenen Rasterlage, das Korrektursignal KORR entweder immer 0 oder immer 1 wäre. Im letzteren Fall wäre anstatt einer Rasterkorrektur durch Interpolation auch diejenige durch modifizierte Bildzeilen möglich, was wegen einer vermiedenen Interplation den Vorteil eines schärferen Bildeindruck hätte. Bei einer 100 Hz-Halbbildrasterlage ABAB ist dagegen das Identifikationssignal DODD mit 50 Hz alternierend, wie in FIG 13p dargestellt. Dementsprechend alterniert auch das Korrektursignal KORR mit 50 Hz, wie in FIG 13q angegeben. Das heißt, daß in dieser Betriebsart immer jedes zweite Halbbild des Kleinbildes durch Interpolation oder modifizierte Bildzeilen zu korrigieren ist.

Mit diesem vorgestellten erfindungsgemäßen Verfahren zur Bild-im-Bild-Einblendung bei im Vergleich zur ursprünglichen Bildfolgefrequenz bzw. Halbbildfolgefrequenz doppelten Bildfolgefrequenz bzw. Halbbildfolgefrequenz reichen insgesamt zwei Speicherbereiche aus. Die Bild-im-Bild-Einblendung ist voraussetzungsgemäß bildschnittfrei. Darüber hinaus wird die Einblendung des Kleinbildes zeitrichtig vorgenommen, d. h. daß keine Bewegungsverwürfelung im Kleinbild auftritt.

Es hat sich daher herausgestellt, daß das erfindungsgemäße Verfahren auch ideal zur Bild-im-Bild-Einblendung bei doppelter Bildfolge bzw. doppelter Halbbildfolgefrequenz einsetzbar ist.


**Patentansprüche**

1. Verfahren zur Bild-im-Bild-Einblendung mit den folgenden Merkmalen:

   - aufeinanderfolgende Bilder ($K_1$, $K_2$) eines Kleinbildes (K) werden in ein Hauptbild, das aufeinanderfolgende Bilder ($H_1$, $H_2$) aufweist, eingeblendet,
   - die Bilder ($K_1$, $K_2$) des Kleinbildes (K) werden in einen von zwei Speicherbereichen (SP1, SP2) einer Speichereinrichtung (SP) eingeschrieben,
   - die Bilder ($K_1$, $K_2$) des Kleinbildes (K) werden in Abhängigkeit von einem Entscheidungssignal (ROF) aus demjenigen Speicherbereich (SP1, SP2) ausgelesen, der eine bildschnittfreie Einblendung des Kleinbildes (K) in das Hauptbild (H) ermöglicht,
   - zu einem Bewertungszeitpunkt ($Y_{free}$) wird ein die Rasterlage des gerade eingeschriebenen Bildes ($K_1$, $K_2$) des Kleinbildes (K) angebendes Zwischensignal (OFF) ermittelt,

   **dadurch gekennzeichnet**, daß

   - der Bewertungszeitpunkt ($Y_{free}$) frühestens durch das Einschreiben derjenigen Zeile des gerade eingeschriebenen Bildes ($K_1$, $K_2$) gegeben ist, die sich ergibt aus der Differenz von maximaler Zeilenanzahl des einzublendenden Bildes ($K_1$, $K_2$) abzüglich derjenigen Zeile ($Y_{off}$), an der im Hauptbild (H) das Kleinbild (K) einzublenden ist, abzüglich der Anzahl ($Y_{dim}$) der einzublendenden Zeilen des einzublendenden Bildes ($K_1$, $K_2$), und spätestens durch das Einschreiben derjenigen Zeile des gerade eingeschriebenen Bildes ($K_1$, $K_2$), die sich ergibt aus der Differenz von maximaler Zeilenanzahl des einzublendenden Bildes ($K_1$, $K_2$) abzüglich derjenigen Zeile ($Y_{off}$), an der im Hauptbild (H) das Kleinbild (K) einzublenden ist, und
   - das Entscheidungssignal (ROF) zu Beginn der Darstellung des Hauptbildes (H) durch Abtastung des Zwischensignals (OFF) erzeugt wird.

2. Verfahren nach Anspruch 1,
   **dadurch gekennzeichnet**, daß der Beginn der Darstellung des Hauptbildes (H) durch den Beginn einer ersten auf einem Bildschirm sichtbaren Bildzeile bestimmt wird.

3. Verfahren nach einem der Ansprüche 1 bis 2,
   **dadurch gekennzeichnet**, daß bei einer auftretenden Zeilensprunginversion im einzublenden Kleinbild (K) eine Zeilenkorrektur im Kleinbild (K) durchgeführt wird.

4. Verfahren nach einem der Ansprüche 1 bis 3,

**dadurch gekennzeichnet**, daß die aufeinanderfolgenden Bilder ($K_1$, $K_2$; $H_1$, $H_2$) des Kleinbildes (K) und Hauptbildes (H) aus ungeraden und geraden Halbbildern bestehen.

5. Verfahren nach einem der Ansprüche 1 bis 4,
**dadurch gekennzeichnet**, daß das Kleinbild (K) und das Hauptbild (H) mit einer im Vergleich zur ursprünglichen Bildfolgefreqenz doppelten Bildfolgefrequenz dargestellt werden, wobei das Hauptbild (H) eine vorgegebene Bildrasterfolge aufweist und ein Identifikationssignal (DODD) zum Erkennen der augenblicklichen Rasterlage des Hauptbildes (H) und abhängig davon ein Rasterkorrektursignal (KORR) generiert werden und das Rasterkorrektursignal (KORR) für ein auszulesendes Bild ($K_1$, $K_2$) aus dem festgelegten Speicherbereich (SP1, SP2) eine Rasterkorrektur auslöst.

6. Verfahren nach Anspruch 5,
**dadurch gekennzeichnet**, daß die Rasterkorrektur des Kleinbildes (K) durch Interpolation oder Verschiebung der Bildzeilen erfolgt.

7. Einrichtung zur Bild-im-Bild-Einblendung mit einem Bildschirm zur Darstellung eines Hauptbildes, in das mindestens ein Kleinbild einblendbar ist, enthaltend:

- eine erste Videoquelle (Q1) zur Darstellung des Hauptbildes (H) mit ersten abwechselnd aufeinanderfolgenden und ersten Synchronsignale (Sync 1) aufweisenden Bildern ($H_1$, $H_2$),
- eine zweite Videoquelle (Q2) zur Darstellung des Kleinbildes (K) mit zweiten abwechselnd aufeinanderfolgenden und zweite Synchronsignale (Sync 2) aufweisenden Bildern ($K_1$, $K_2$),
- eine Speichereinrichtung (SP) mit zwei Speicherbereichen (SP1, SP2), in die die aufeinanderfolgenden Bilder ($K_1$, $K_2$) des Kleinbildes (K) mittels einer Einschreibeeinrichtung (EN) einschreibbar sind, wobei ein Speicherbereich (SP1) zum Einschreiben der ersten Bilder ($K_1$) und der andere Speicherbereich (SP2) zum Einschreiben der zweiten Bilder ($K_2$) des Kleinbildes (K) vorgesehen ist,
- eine Ausleseeinrichtung (AS) zum Auslesen der in den Speicherbereichen (SP1, SP2) gespeicherten Bilder ($K_1$, $K_2$) des Kleinbildes (K),
- eine Einblendeinrichtung (ES) zur Einblendung der auszulesenden Bilder ($K_1$, $K_2$) des Kleinbildes (K) in das Hauptbild (H),
- eine Entscheidungseinrichtung (EE) zur Erzeugung eines der Ausleseeinrichtung (AS) zuführbaren Entscheidungssignals (ROF), durch das festgelegt wird, aus welchen der beiden Speicherbereiche (SP1, SP2) ein gespeichertes Bild ($K_1$, $K_2$) des Kleinbildes (K) auszulesen ist, so daß eine bildschnittfreie Einblendung ermöglicht wird, wobei die Entscheidungseinrichtung (EE) ein erstes Mittel (D1) aufweist, durch das zu einem Bewertungszeitpunkt ($Y_{free}$) ein die Rasterlage des gerade eingeschriebenen Bildes ($K_1$, $K_2$) des Kleinbildes (K) angebendes Zwischensignal (OFF) erzeugt wird,

**dadurch gekennzeichnet**, daß
die Entscheidungseinrichtung (EE) darüber hinaus aufweist:

- ein zweites Mittel (FZ), durch das der Bewertungszeitpunkt ($Y_{free}$) festgelegt wird und zwar frühestens durch das Einschreiben derjenigen Zeile des gerade eingeschriebenen Bildes ($K_1$, $K_2$), die sich ergibt aus der Differenz von maximaler Zeilenanzahl des einzublendenden Bildes ($K_1$, $K_2$) abzüglich derjenigen Zeile ($Y_{off}$), an der im Hauptbild (H) das Kleinbild (K) einzublenden ist, abzüglich der Anzahl ($Y_{dim}$) der einzublendenden Zeilen des einzublendenden Bildes ($K_1$, $K_2$), und spätestens durch das Einschreiben derjenigen Zeile des gerade eingeschriebenen Bildes ($K_1$, $K_2$), die sich ergibt aus der Differenz von maximaler Zeilenanzahl des einzublendenden Bildes ($K_1$, $K_2$) abzüglich derjenigen Zeile ($Y_{off}$), an der im Hauptbild (H) das Kleinbild (K) einzublenden ist, und
- ein drittes Mittel (D2), durch das das Entscheidungssignal (ROF) zu Beginn der Darstellung des Hauptbildes (H) durch Abtastung des Zwischensignals (OFF) erzeugt wird.

8. Einrichtung nach Anspruch 7,
**dadurch gekennzeichnet**, daß die Entscheidungseinrichtung (EE) Eingangsklemmen (10, 11, 12) für Synchronsignale (Sync 1, Sync 2) des Hauptbildes (H) und Kleinbildes (K) sowie für ein Signal ($Y_{off}$), das die Lage des Kleinbildes (K) im Hauptbild (H) anzeigt, aufweist, daß die Eingangsklemme (10) für das Synchronsignal (Sync 1) des Hauptbildes (H) mit einer Einrichtung (DE2) verbunden ist, an deren Ausgang ein Signal (LZ 27) abgreifbar ist, das den Beginn einer ersten auf einem Bildschirm sichtbaren Bildzeile des Hauptbildes (H) anzeigt und einer Logikanordnung, die nach Maßgabe dieses Signales (LZ 27) das Entscheidungssignal (ROF) bereitstellt.

**9.** Einrichtung nach Anspruch 7 oder 8,
**dadurch gekennzeichnet**, daß
die Entscheidungseinrichtung (EE) aufweist:

- ein erstes D-Flip-Flop (D1), dessen Dateneingang (D) ein Signal (SODD) empfängt, das anzeigt, ob ein gerade in die Speichereinrichtung (SP) eingeschriebenes Bild des Kleinbildes (K) ein erstes oder zweites Bild ($K_1$, $K_2$) ist und
- dessen Takteingang (C) ein den Bewertungszeitpunkt ($Y_{free}$) angebendes Freigabesignal ($TY_{free}$) empfängt und
- dessen Ausgang (Q) mit einem Dateneingang (D) eines zweiten D-Flip-Flops (D2) verbunden ist,
- an dessen Takteingang (C) das Signal (LZ 27) anlegbar ist, das den Beginn des Bildes ($H_1$, $H_2$) des Hauptbildes (H) festlegt, und
- an dessen Ausgang (Q) das Entscheidungssignal (ROF) abgreifbar ist.

**10.** Einrichtung nach einem der Ansprüche 7 bis 9,
**dadurch gekennzeichnet**, daß die Entscheidungseinrichtung (EE) einen Freigabezeitpunktdekoder (FZ) zum Generieren des Freigabesignales ($TY_{free}$) aufweist, der für verschiedene Bereiche von möglichen Lagen ($Y_{off}$) des Kleinbildes (K) im Hauptbild (H) jeweils ein Freigabesignal ($TY_{free}$) bereitstellt.

**11.** Einrichtung nach einem der Ansprüche 7 bis 10,
**dadurch gekennzeichnet**, daß eine Korrektureinrichtung (KE) zum Korrigieren auftretender Zeilensprunginversionen im einzublendenden Kleinbild (K) vorgesehen ist.

**12.** Einrichtung nach Anspruch 11,
**dadurch gekennzeichnet**, daß die Korrektureinrichtung (KS) geeignet ist

- sowohl ein erstes Bild ($K_1$) des Kleinbildes (K) das zur Einblendung in ein erstes oder zweites Bild ($H_1$, $H_2$) des Hauptbildes (H) vorgesehen ist,
- als auch ein zweites Bild ($K_2$) des Kleinbildes (K), das zur Einblendung in ein zweites Bild ($H_2$) des Hauptbildes (H) vorgesehen ist, unverändert und
- ein zweites Bild ($K_2$) des Kleinbildes (K), das zur Einblendung in ein erstes Bild ($K_1$) des Hauptbildes (H) vorgesehen ist, um eine Bildzeile nach unten versetzt der Entscheidungseinrichtung (EE) zuzuführen.

**13.** Einrichtung nach Anspruch 11,
**dadurch gekennzeichnet**, daß
die Korrektureinrichtung (KS) geeignet ist,

- sowohl ein zweites Bild ($K_2$) des Kleinbildes (K), das zur Einblendung in ein erstes oder zweites Bild ($H_1$, $H_2$) des Hauptbildes (H) vorgesehen ist,
- als auch ein erstes Bild ($K_1$) des Kleinbildes (K), das zur Einblendung in ein erstes Bild ($H_1$) des Hauptbildes (H) vorgesehen ist, unverändert und
- ein erstes Bild ($K_1$) des Kleinbildes (K), das zur Einblendung in ein zweites Bild ($H_2$) des Hauptbildes (H) vorgesehen ist, um eine Halbbildzeile nach oben versetzt der Entscheidungseinrichtung (EE) zuzuführen.

**14.** Einrichtung nach einem der der Ansprüche 7 bis 12,
**dadurch gekennzeichnet**, daß
die Speichereinrichtung (SP) einen Speicherbereich aufweist, der mehr als zwei Kleinbilder speichern kann, insbesondere einen Speicherbereich, der zum Speichern eines Hauptbildes geeignet ist.

**15.** Einrichtung nach Anspruch 14,
**dadurch gekennzeichnet**, daß
in die Speichereinrichtung (SP) Markierungskennzeichnungen einschreibbar sind, die die Lage des Speicherbereichs (SP1, SP2) für das Kleinbild (K) innerhalb des Speicherbereichs (SPO) für das Hauptbild (H) festlegen.

**Claims**

**1.** Method for picture-in-picture insertion, having the following features:

- successive frames ($K_1$, $K_2$) of a small picture (K) are inserted into a main picture which has successive frames ($H_1$, $H_2$),
- the frames ($K_1$, $K_2$) of the small picture (K) are written into two memory regions (SP1, SP2) of a memory device (SP),
- the frames ($K_1$, $K_2$) of the small picture (K) are read out, as a function of a decision signal (ROF) from that memory region (SP1, SP2) which enables a joint-line-free insertion of the small picture (K) into the main picture (H),
- at an evaluation instant ($Y_{free}$), an intermediate signal (OFF) specifying the scanning position of the frame ($K_1$, $K_2$), just written in, of the small picture (K) is determined,

characterized in that

- the evaluation instant ($Y_{free}$) is given at the earliest by the writing-in of that line of the frame ($K_1$, $K_2$) just written in, which results from the difference between the maximum line number of the frame ($K_1$, $K_2$) to be inserted minus that line ($Y_{off}$) at which the small picture (K) is to be inserted into the main picture (H), minus the number ($Y_{dim}$) of the lines to be inserted from the frame ($K_1$, $K_2$) to be inserted, and at the latest by the writing-in of that line of the frame ($K_1$, $K_2$) just written in which results from the difference between the maximum line number of the frame ($K_1$, $K_2$) to be inserted minus that line ($Y_{off}$) at which the small picture (K) is to be inserted into the main picture (H), and
- the decision signal (ROF) is generated at the beginning of the display of the main picture (H) by sampling the intermediate signal (OFF).

2. Method according to Claim 1, characterized in that the beginning of the display of the main picture (H) is determined by the beginning of a first picture line which is visible on a screen.

3. Method according to Claim 1 or 2, characterized in that, in the case of an interlace inversion in the small picture (K) to be inserted, a line correction in the small picture (K) is carried out.

4. Method according to one of Claims 1 to 3, characterized in that the successive frames ($K_1$, $K_2$; $H_1$, $H_2$) of the small picture (K) and the main picture (H) consist of odd-numbered and even-numbered half-frames.

5. Method according to one of Claims 1 to 4, characterized in that the small picture (K) and the main picture (A) are displayed at a frame repetition frequency which is doubled in comparison with the original frame repetition frequency, the main picture (H) having a predetermined frame scanning order, and an identification signal (DODD) for detecting the instantaneous scanning position of the main picture (H) and, as a function thereof, a scanning correction signal (KORR) being generated, and the scanning correction signal (KORR) triggering a scanning correction for a frame ($K_1$ $K_2$) to be read out from the determined memory region (SP1, SP2).

6. Method according to Claim 5, characterized in that the scanning correction of the small picture (K) is carried out by interpolation or displacement of the picture lines.

7. Apparatus for picture-in-picture insertion, having a screen for displaying a main picture, into which at least one small picture may be inserted, containing:

- a first video source (Q1) for displaying the main picture (H) having first frames ($H_1$, $H_2$) which follow each other alternately and have first synchronizing signals (Sync 1),
- a second video source (Q2) for displaying the small picture (K) having second frames ($K_1$, $K_2$) which follow each other alternately and have second synchronizing signals (Sync 2),
- a memory device (SP) having two memory regions (SP1, SP2), into which the successive frames ($K_1$, $K_2$) of the small picture (K) can be written by means of a writing in device (EN), one memory region (SP1) being provided for writing in the first frames ($K_1$) and the other memory region (SP2) being provided for writing in the second frames ($K_2$) of the small picture (K),
- a read-out device (AS) for reading out the frames ($K_1$, $K_2$) of the small picture (K) stored in the memory regions (SP1, SP2),
- an insertion device (ES) for inserting the frames ($K_1$, $K_2$) of the small picture (K) to be read out into the main picture (H),
- a decision device (EE) for generating a decision signal (ROF) which can be fed to the read-out device (AS), by means of which signal it is determined from which of the two memory regions (SP1, SP2) a stored frame ($K_1$,

$K_2$) of the small picture (K) is to be read, so that a joint-line-free insertion is enabled, the decision device (EE) having a first means (D1) by means of which an intermediate signal (OFF) specifying the scanning position of the frame ($K_1$, $K_2$) of the small picture (K) just written in is generated at an evaluation instant ($Y_{free}$),

characterized in that the decision device (EE) furthermore has:

- a second means (FZ) by means of which the evaluation instant ($Y_{free}$) is determined, specifically at the earliest by the writing-in of that line of the frame ($K_1$, $K_2$) just written in, which results from the difference between the maximum line number of the frame ($K_1$, $K_2$) to be inserted minus that line ($Y_{off}$) at which the small picture (K) is to be inserted into the main picture (H), minus the number ($Y_{dim}$) of the lines to be inserted from the frame ($K_1$, $K_2$) to be inserted, and at the latest by the writing-in of that line of the frame ($K_1$, $K_2$) just written in which results from the difference between the maximum line number of the frame ($K_1$, $K_2$) to be inserted minus that line ($Y_{off}$) at which the small picture (K) is to be inserted into the main picture (H), and
- a third means (D2), by means of which the decision signal (ROF) is generated at the beginning of the display of the main picture (H) by sampling the intermediate signal (OFF).

8. Apparatus according to Claim 7, characterized in that the decision device (EE) has input terminals (10, 11, 12) for synchronizing signals (Sync 1, Sync 2) of the main picture (H) and small picture (K) and for a signal ($Y_{off}$) which indicates the position of the small picture (K) in the main picture (H), in that the input terminal (10) for the synchronizing signal (Sync 1) of the main picture (H) is connected to a device (DE2) at whose output a signal (LZ 27) can be picked off, which signal indicates the beginning of a first frame line of the main picture (H) which can be seen on a screen, and to a logic arrangement which provides the decision signal (ROF) according to this signal (LZ 27).

9. Apparatus according to Claim 7 or 8, characterized in that the decision device (EE) has:

- a first D flip-flop (D1), whose data input (D) receives a signal (SODD) which indicates whether a frame of the small picture (K) just written into the memory device (SP) is a first or second frame ($K_1$, $K_2$) and
- whose clock input (C) receives an enable signal ($TY_{free}$) specifying the evaluation instant ($Y_{free}$) and
- whose output (Q) is connected to a data input (D) of a second D flip-flop (D2),
- to whose clock input (C) the signal (LZ 27) may be applied, which determines the beginning of the frame ($H_1$, $H_2$) of the main picture (H), and
- at whose output (Q) the decision signal (ROF) may be picked off.

10. Apparatus according to one of Claims 7 to 9, characterized in that the decision device (EE) has an enable instant decoder (FZ) for generating the enable signal ($TY_{free}$) which decoder, for various ranges of possible positions ($Y_{off}$) of the small picture (K) in the main picture (H), produces in each case an enable signal ($TY_{free}$).

11. Apparatus according to one of Claims 7 to 10, characterized in that a correction device (KE) is provided for the correction of interlace inversions which occur in the small picture (K) to be inserted.

12. Apparatus according to Claim 11, characterized in that the correction device (KS) is suitable for feeding

- a first frame ($K_1$) of the small picture (K), which is intended for insertion into a first or second frame ($H_1$, $H_2$) of the main picture (H),
- and a second frame ($K_2$) of the small picture (K), which is intended for insertion into a second frame ($H_2$) of the main picture (H), unchanged and
- a second frame ($K_2$) of the small picture (K), which is intended for insertion into a first frame ($K_1$) of the main picture (H), offset downwards by one frame line, to the decision device (EE).

13. Apparatus according to Claim 11, characterized in that the correction device (KS) is suitable to feed

- a second frame ($K_2$) of the small picture (K), which is intended for insertion into a first or second frame ($H_1$, $H_2$) of the main picture (H),
- and a first frame ($K_1$) of the small picture (K), which is intended for insertion into a first frame ($H_1$) of the main picture (H), unchanged and
- a first frame ($K_1$) of the small picture (K), which is intended for insertion into a second frame ($H_2$) of the main picture (H), offset upwards by half a frame line, to the decision device (EE).

14. Apparatus according to one of Claims 7 to 12, characterized in that the memory device (SP) has a memory region which can store more than two small pictures, in particular a memory region which is suitable for storing a main picture.

15. Apparatus according to Claim 14, characterized in that marking identifiers can be written into the memory device (SP), which identifiers determine the position of the memory region (SP1, SP2) for the small picture (K) within the memory region (SPO) for the main picture (H).

**Revendications**

1. Procédé d'insertion image-dans-image présentant les caractéristiques suivantes :

   - on insère des images sucessives ($K_1$,$K_2$) d'une petite image (K) dans une image principale, qui comporte des images successives ($H_1$, $H_2$),
   - on enregistre les images ($K_1$,$K_2$) de la petite image (K) dans l'une parmi deux zones de mémoire (SP1,SP2 d'un dispositif de mémoire (SP),
   - on lit les images ($K_1$,$K_2$) de la petite image (K) en fonction d'un signal de décision (ROF) dans la zone de mémoire (SP1,SP2), qui permet une insertion, sans coupure d'image, de la petite image (K) dans l'image pricipale (H),
   - à un instant d'évaluation ($Y_{free}$), on détermine un signal intermédiaire (OFF), qui indique la position de la trame ($K_1$, $K_2$) précisément enregistrée de la petite image (K),

   caractérisé par le fait que

   - l'instant d'évaluation ($Y_{free}$) est défini au plus tôt par l'enregistrement de celles des lignes de l'image précisément enregistrée ($K_1$,$K_2$), qui est obtenue à partir du nombre maximum de lignes de l'image à insérer ($K_1$, $K_2$) diminué de la ligne ($Y_{off}$), où la petite image (K) doit être insérée dans l'image principale (H), et diminué du nombre ($Y_{dim}$) des lignes à insérer de l'image à insérer ($K_1$,$K_2$), et au plus tard par l'enregistrement de celle des lignes de l'image précisément enregistrée ($K_1$,$K_2$), qui est obtenue à partir du nombre maximum de lignes de l'image devant être insérée ($K_1$,$K_2$) diminué de la ligne ($Y_{off}$), où la petite image (K) doit être insérée dans l'image principale (H), et
   - on produit le signal de décision (ROF) au début de la représentation de l'image principale (H) par balayage du signal intermédiaire (OFF).

2. Procédé suivant la revendication 1, caractérisé par le fait que l'on détermine le début de la représentation de l'image principale (H) par le début d'une première ligne d'image visible sur un écran.

3. Procédé suivant l'une des revendications 1 et 2, caractérisé par le fait que, dans le cas où il apparaît une inversion à saut de lignes dans la petite image à insérer (K), on effectue une correction de ligne dans la petite image (K).

4. Procédé suivant l'une des revendications 1 à 3, caractérisé par le fait que les images successives ($K_1$,$K_2$; $H_1$,$H_2$) de la petite image (K) et de l'image principale (H) sont constituées de trames impaire et paire.

5. Procédé suivant l'une des revendications 1 à 4, caractérisé par le fait que l'on représente la petite image (K) et l'image principale (H) à une fréquence de récurrence d'images égale au double de la fréquence de récurrence d'images originelle, l'image principale (H) ayant une séquence prescrite de trames d'image, et on génère un signal d'identification (DODD) destiné à reconnaître la position instantanée de trame de l'image principale (H) et, en fonction de cela, un signal de correction de trame (KORR) et le signal de correction de trame (KORR) déclenche pour une image devant être lue ($K_1$,$K_2$), à partir de la zone de mémoire fixée (SP1,SP2) une correction de trame.

6. Procédé suivant la revendication 5, caractérisé par le fait que la correction de trame de la petite image (K) s'effectue par interpolation ou décalage des lignes d'image.

7. Dispositif d'insertion image-dans-image comportant un écran destiné à représenter une image principale, dans laquelle au moins une petite image peut être insérée, comportant :

   - une première source vidéo (Q1) destinée à représenter l'image principale (H) par des premières images ($H_1$,$H_2$)

qui se succèdent alternativement et qui comportent des premiers signaux de synchronisation (Sync 1),

- une seconde source vidéo (Q2) destinée à représenter la petite image (K) comportant des secondes images ($K_1$,$K_2$) se succédant alternativement et ayant des seconds signaux de synchronisation (Sync 2),
- un dispositif de mémoire (SP) comportant deux zones de mémoire (SP1,SP2), dans lesquelles les images successives ($K_1$,$K_2$) de la petite image (K) peuvent être enregistrées au moyen d'un dispositif d'enregistrement (EN), une zone de mémoire (SP1) étant prévue pour l'enregistrement des premières images ($K_1$) et l'autre zone de mémoire (SP2) étant prévue pour l'enregistrement des secondes images ($K_2$) de la petite image (K),
- un dispositif de lecture (AS) destiné à lire les images ($K_1$,$K_2$) de la petite image (K), qui sont mémorisées dans les zones de mémoire (SP1,SP2),
- un dispositif d'insertion (ES) destiné à insérer les images ($K_1$,$K_2$) devant être lues de la petite image (K) dans l'image principale (H),
- un dispositif de décision (EE) destiné à produire un signal de décision (ROF), qui peut être envoyé au dispositif de lecture (AS) et qui fixe à partir de laquelle des deux zones de mémoire (SP1,SP2) doit être lue une image mémorisée ($K_1$,$K_2$) de la petite image (K), de sorte à permettre une insertion sans coupure d'image, le dispositif de décision (EE) comprenant des premiers moyens (D1) permettant de produire, à un instant d'évaluation ($Y_{free}$), un signal intermédiaire (OFF) qui indique la position de la trame précisément enregistrée ($K_1$, $K_2$) de la petite image (K),

caractérisé par le fait que le dispositif de décision (EE) comporte en outre :

- des seconds moyens (FZ) , par lesquels le point d'évaluation ($Y_{free}$) est fixé et ce au plus tôt par l'enregistrement de la ligne de l'image précisément inscrite ($K_1$,$K_2$), qui est obtenue à partir du nombre maximum de lignes de l'image devant être insérée ($K_1$,$K_2$), diminué de la ligne ($Y_{off}$), où la petite image (K) doit être insérée dans l'image principale (H), et diminué du nombre ($Y_{dim}$) des lignes à insérer de l'image devant être insérée ($K_1$,$K_2$), et au plus tard par l'enregistrement de la ligne de l'image précisément inscrite ($K_1$,$K_2$), qui est obtenue à partir du nombre maximum de lignes de l'image à insérer ($K_1$,$K_2$) diminué de la ligne ($Y_{off}$), où la petite image (K) doit être insérée dans l'image principale (H), et
- des troisièmes moyens (D2), par lesquels le signal de décision (ROF) est produit au début de la représentation de l'image principale (H) par balayage du signal intermédiaire (OFF).

8. Dispositif selon la revendication 7, caractérisé par le fait que le dispositif de décision (EE) comporte des bornes d'entrée (10, 11, 12) pour des signaux de synchronisation (Sync 1, Sync 2) de l'image principale (H) et de la petite image (K) ainsi que pour un signal ($Y_{off}$), qui indique la position de la petite image (K) dans l'image principale (H), que la borne d'entrée (10) pour le signal de synchronsation (Sync 1) de l'image principale (H) est reliée à un dispositif (DE2), sur la sortie duquel peut être prélevé un signal (LZ 27), qui indique le début d'une première ligne de l'image principale (H), qui est visible sur un écran, et à un dispositif logique, qui, en fonction de ce signal (LZ 27), prépare le signal de décision (ROF).

9. Dispositif suivant la revendication 7 ou 8, caractérisé par le fait que le dispositif de décision (EE) comprend :

- une première bascule bistable de type D (D1), dont l'entrée de données (D) reçoit un signal (SODD) qui indique si une image, précisément enregistrée dans le dispositif de mémoire (SP), de la petite image (K), est une première ou une seconde image ($K_1$,$K_2$), et
- dont l'entrée de cadence (C) reçoit un signal de libération ($TY_{free}$) , qui indique l'instant de pondération ($Y_{free}$) et
- dont la sortie (Q) est reliée à une entrée de données (D) d'une seconde bascule bistable du type D (D2),
- à l'entrée de cadence (C) duquel peut être appliqué le signal (LZ 27), qui fixe le début de l'image ($H_1$, $H_2$) de l'image principale (H)
- et sur la sortie (Q) duquel peut être prélevé le signal de décision (ROF).

10. Dispositif suivant l'une des revendications 7 à 9, caractérisé par le fait que le dispositif de décision (EE) comporte un décodeur d'instants de libération (FZ) destiné à produire le signal de libération ($TY_{free}$), qui prépare respectivement un signal de libération ($TY_{free}$) pour différentes zones de positions possibles ($Y_{off}$) de la petite image (K) dans l'image principale (H).

11. Dispositif suivant l'une des revendications 7 à 10, caractérisé par le fait qu'il est prévu un dispositif de correction (KE) destiné à corriger des inversions de saut de lignes, qui apparaissent, dans la petite image à insérer (K).

12. Dispositif suivant la revendication 11, caractérisé par le fait que le dispositif de correction (KS) convient

- pour envoyer sans modification aussi bien une première image ($K_1$) de la petite image (K), qui est destinée à être insérée dans une première ou seconde image ($H_1$,$H_2$) de l'image principale (H),
- qu'une seconde image ($K_2$) de la petite image (K), qui est destinée à être insérée dans une seconde image ($H_2$) de l'image principale (H), et
- envoyer, avec un décalage d'une ligne d'image vers le bas, une seconde image ($K_2$) de la petite image (K), qui est destinée à être insérée dans une première image ($K_1$) de l'image principale (H), au dispositif de décision (EE).

**13.** Dispositif suivant la revendication 11, caractérisé par le fait que le dispositif de correction (KS) convient

- pour envoyer sans modification aussi bien une seconde image ($K_2$) de la petite image (K), qui est destinée à être insérée dans une première ou une seconde image ($H_1$,$H_2$) de l'image principale (H),
- qu'une première image ($K_1$) de la petite image (K), qui est destinée à être insérée dans une première image ($H_1$) de l'image principale (H), et
- envoyer avec un décalage d'une ligne de trame vers le haut, une première image ($K_1$) de la petite image (K), qui est destinée à être insérée dans une seconde image ($H_2$) de l'image principale (H), au dispositif de décision (EE).

**14.** Dispositif suivant l'une des revendications 7 à 12, caractérisé par le fait que le dispositif de mémoire (SP) comporte une zone de mémoire, qui peut mémoriser plus de deux petites images, notamment une zone de mémoire, qui convient pour la mémorisation d'une image principale.

**15.** Dispositif suivant la revendication 14, caractérisé par le fait que dans le dispositif de mémoire (SP) peuvent être enregistrées des caractérisations de marquage, qui fixent la position de la zone de mémoire (SP1,SP2) pour la petite image (K) à l'intérieur de la zone de mémoire (SPO) pour l'image principale (H).

# FIG 1

# FIG 2

## FIG 3

## FIG 12

# FIG 4

# FIG 5

EP 0 471 878 B1

# FIG 6

## FIG 7

## FIG 8

# FIG 9

# FIG 10

# FIG 13

# FIG 11

# FIG 14